# EUROPÄISCHE PATENTSCHRIFT

(11) **EP 1 926 774 B1**
(45) Veröffentlichungstag und Bekanntmachung des Hinweises auf die Patenterteilung: **23.12.2009**
(21) Anmeldenummer: 06805704.1
(22) Anmeldetag: 14.09.2006
(51) Int. Cl.: C08L 23/16, C08L 23/26, C08C 19/25, C08L 83/04, C08L 23/18

(54) **ELASTOMERBLEND**
ELASTOMER BLEND
MELANGE ELASTOMERE

(30) Priorität: 21.09.2005 DE 102005045184
(43) Veröffentlichungstag der Anmeldung: 04.06.2008
(73) Patentinhaber: Carl Freudenberg KG, 69469 Weinheim (DE)
(72) Erfinder: ADLER, Matthias, 64646 Heppenheim (DE); BIERINGER, Ruth, 646 68 Rimbach (DE); VIOL, Michael, 69121 Heidelberg (DE)
(86) Internationale Anmeldenummer: PCT/EP2006/008935
(87) Internationale Veröffentlichungsnummer: WO 2007/033790

(56) Entgegenhaltungen:
- EP-A- 1 146 082
- EP-A1- 1 464 670
- US-B2- 6 875 534

## Beschreibung

### Technisches Gebiet

Die Erfindung betrifft ein Elastomerblend, ein Verfahren zu dessen Herstellung und dessen Verwendung. Das Elastomerblend soll insbesondere als Material im Produktions-, Transport-, Prozeßtechnik- und Verpackungsbereich von Lebensmitteln, insbesondere von Trinkwasser, oder von medizinischen oder pharmazeutischen Produkten oder im Bereich der Elektronikindustrie Verwendung finden.

### Stand der Technik

Das Dokument EP 1 075 034 A1 beschreibt die Anwendung von Polyisobutylen oder Perfluoropolyether, der über Hydrosilylierung vernetzt, als Dichtungsmaterial in der Brennstoffzelle.

Das Dokument US 6,743,862 B2 offenbart eine vernetzbare Kautschukkomposition, vorzugsweise aus Ethylen-Propylen-Dien-Monomer, mit einer mindestens zwei SiH-Gruppen enthaltenden Verbindung und optional mit einem Platinkatalysator. Zudem wird die Verwendung dieser Kautschukkomposition als Dichtungsmaterial beschrieben.

Aus dem Dokument EP 1 277 804 A1 sind Kompositionen bekannt aus einem Vinylpolymer mit zumindest einer über Hydrosilylierung vernetzbaren Alkenylgruppe, einer Verbindung mit einer hydrosilylgruppenhaltigen Komponente, einem Hydrosilylierungskatalysator sowie einer aliphatischen ungesättigten Verbindung mit einem Molekulargewicht von nicht größer als 600 g/mol.

Die nach dem Dokument EP 0 344 380 B1 bekannten über Schwefel oder Peroxid vernetzten Blends weisen einen hochungestättigten Kautschuk und zwei Ethylen/Propylen/nichtkonjugierte Dien-Terpolymere mit unterschiedlichen Molekulargewichten auf.

Die klassische Vernetzungschemie von Dienkautschuken, wie eine Vernetzung über Schwefel oder Peroxid, führt zu einem hohen Anteil an flüchtigen Bestandteilen im vernetzten Material und zu Produkten, deren chemische Eigenschaften deutlich unter den Werten des Einzelcompounds liegen können. Ursache hierfür kann eine schlechte Vermischung und eine ungenügende Covulkanisation sein.

In dem Dokument US 6,875,534 B2 wird die Verwendung eines Blends aus Polyisobutylen und Silikon, das über Hydrosilylierung vernetzt, als Dichtung in der Brennstoffzelle beschrieben. Silikone besitzen bei feuchter Umgebung, wie zum Beispiel in der Brennstoffzelle, und bei längerem Einsatz unter Druck und erhöhte Temperatur schlechte Druckverformungsreste.

Das Dokument EP 1 146 082 A1 offenbart ein Verfahren zur Vernetzung eines Blends eines thermoplastischen Harzes und eines ungesättigten Kautschuks, der Isobutylen-Isopren-Divinylbenzol umfasst, wobei das thermoplastische Harz inert gegenüber dem Kautschuk, dem Hydrosilylierungsmittel und dem Hydrosilylierungskatalysator ist.

### Darstellung der Erfindung

Der Erfindung liegt die Aufgabe zu Grunde, ein schwefelfreies und emissionsarmes Elastomerblend bereitzustellen, das die Eigenschaften von verschiedenen Kautschuken besitzt, und dessen mechanische Eigenschaften, insbesondere in Bezug auf Härte, Zugfestigkeit, Bruchdehnung, Gasdurchlässigkeit (Permeation) und/oder Druckverformungsrest (DVR), gegenüber den Einzelcompounds, das heißt gegenüber Mischungen oder Verbindungen, die nur einen Kautschuktyp aufweisen, verbessert sind, und das eine verbesserte Temperatur- und Medienbeständigkeit aufweist.

Die Lösung der gestellten Aufgabe wird mit den Merkmalen des Anspruchs 1 erreicht.

Das Elastomerblend umfasst erfindungsgemäß einen Kautschuk (A) mit mindestens zwei über Hydrosilylierung vernetzbaren funktionellen Gruppen, mindestens einen anderen Kautschuk (B) mit mindestens zwei über Hydrosilylierung vernetzbaren funktionellen Gruppen, wobei sich der Kautschuk (B) vom Kautschuk (A) chemisch unterscheidet, als Vernetzer (C) ein Hydrosiloxan oder Hydrosiloxanderivat oder ein Gemisch aus mehreren Hydrosiloxanen oder -derivaten, die im Mittel mindestens zwei SiH-Gruppen pro Molekül aufweisen, ein Hydrosilylierungs-Katalysatorsystem (D) und zumindest einen Füllstoff (E).

Dabei ist das Elastomerblend bevorzugt im Wesentlichen silikonfrei und/oder im Wesentlichen thermoplastfrei, das heißt, das Elastomerblend umfasst bevorzugt gleich oder weniger als 30 phr Silikon, besonders bevorzugt weniger als 20 phr Silikon, und/oder bevorzugt weniger als 30 Gew.-% eines Thermoplasten. Besonders bevorzugt sind die Elastomerblends vollständig silikonfrei und/oder vollständig thermoplastfrei.

Die Elastomerblends haben angesichts dessen, dass sie nahezu kein oder kein Silikon aufweisen, den Vorteil, dass die Permeation von Fluiden oder Gasen durch deren Werkstoffe gegenüber Silikonkautschuk wesentlich geringer ist.

Die bleibende Verformung nach Belastung, insbesondere unter erhöhten Temperaturen über 80°C, wie sie durch den Druckverformungsrest gekennzeichnet werden, ist bei diesen Gummis, das heißt den Elastomerblends aus den vernetzten Kautschuken (A) und (B), besonders gering. Diese Eigenschaft zeichnet sie beispielsweise besonders gegenüber thermoplastischen Elastomerblends aus, die einen thermoplastischen Kunststoff umfassen. Da die physikalischen Netzstellen bei einer Verformung abgleiten können, ist die bleibende Verformung bei thermoplastischen Elastomeren höher als bei Gummi.

Die Unteransprüche stellen vorteilhafte Weiterbildungen des Erfindungsgegenstandes dar.

In bevorzugter Ausgestaltung umfasst das Elastomerblend zusätzlich ein über Hydrosilylierung vernetzbares Coagens (F) und/oder zumindest ein Additiv (G).

Die mechanischen Eigenschaften, insbesondere der Druckverformungsrest (DVR), von über Hydrosilylierung vernetzten Elastomeren aus Polymeren, die nur zwei funktionelle Gruppen enthalten, ist meist sehr stark vom Verhältnis der funktionellen Gruppen zu den SiH-Gruppen der Hydrosiloxane abhängig. Daher sind Elastomerblends bevorzugt, die im Mittel aller Kautschuke mehr als zwei über Hydrosilylierung vernetzbare funktionelle Gruppen aufweisen.

In bevorzugter Ausgestaltung des Elastomerblends weist der Kautschuk (A) mehr als zwei über Hydrosilylierung vernetzbare funktionelle Gruppen auf, und der zumindest eine Kautschuk (B) weist zwei über Hydrosilylierung vernetzbare funktionelle Gruppen auf, vorzugsweise zwei endständige Vinylgruppen.

Für eine Verbesserung der mechanischen Eigenschaften des Elastomerblends, beispielsweise in Bezug auf Druckverformungsrest (DVR), Bruchdehnung, und/oder Zugfestigkeit Gasdurchlässigkeit (Permeation), insbesondere gegenüber den Einzelcompounds sind vorteilhafterweise
- 20 bis 95 phr des Kautschuks (A),
- 80 bis 5 phr des zumindest einen Kautschuks (B),
- eine Menge des Vernetzers (C), wobei das Verhältnis der SiH-Gruppen zu den über Hydrosilylierung vernetzbaren funktionellen Gruppen bei 0,2 bis 20 liegt, bevorzugt bei 0,5 bis 5, besonders bevorzugt bei 0,8 bis 1,2,
- 0,05 bis 100000 ppm, bevorzugt 0,1 bis 5000 ppm des Hydrosilylierungs-Katalysatorsystems (D) und
- 5 bis 800 phr des zumindest einen Füllstoffs (E), für nicht magnetische Füllstoffe bevorzugt 10 bis 200 phr, für magnetische oder magnetisierbare bevorzugt 200 bis 600 phr, eingesetzt.

Für eine Verbesserung der mechanischen Eigenschaften des Elastomerblends, beispielsweise in Bezug auf den Druckverformungsrest (DVR) bei 100°C in Luft, sind insbesondere gegenüber den Einzelcompounds vorteilhafterweise
- 50 bis 95 phr des Kautschuks (A),
- 50 bis 5 phr des zumindest einen Kautschuks (B),
- eine Menge des Vernetzers (C), wobei das Verhältnis der SiH-Gruppen zu den
   über Hydrosilylierung vernetzbaren funktionellen Gruppen bei 0,2 bis 20 liegt, bevorzugt bei 0,5 bis 5, besonders bevorzugt bei 0,8 bis 1,2,
- 0,05 bis 100000 ppm, bevorzugt 0,1 bis 5000 ppm des Hydrosilylierungs-Katalysatorsystems (D) und
- 5 bis 800 phr des zumindest einen Füllstoffs (E), für nicht magnetische Füllstoffe bevorzugt 10 bis 200 phr, für magnetische oder magnetisierbare bevorzugt 200 bis 600 phr, eingesetzt.

In bevorzugter Ausgestaltung umfasst das Elastomerblend zusätzlich
- 0,1 bis 30 phr, bevorzugt 1 bis 10 phr, des Coagens (F) und/oder
- 0,1 bis 20 phr des zumindest einen Additivs (G).

Die Abkürzung phr bedeutet parts per hundred rubber, gibt also die Gewichtsanteile pro hundert Gewichtsteile Kautschuk an. Die angegebenen Bereiche der einzelnen Komponenten erlauben eine ganz spezifische Anpassung des Elastomerblends an die gewünschten Eigenschaften.

Überraschend gute mechanische Eigenschaften, insbesondere besonders niedrige Druckverformumgsrestwerte (DVR), insbesondere bei 100°C in Luft, werden erzielt bei Elastomerblends, die vorzugsweise 50 bis 70 phr des Kautschuks (A) und 50 bis 30 phr des Kautschuks (B) aufweisen.

Überraschend gute Eigenschaften, insbesondere besonders gute Zugfestigkeitswerte und/oder vergleichsweise geringe Gasdurchlässigkeitswerte, werden erzielt bei Elastomerblends, die vorzugsweise 20 bis 50 phr des Kautschuks (A) und 80 bis 50 phr des Kautschuks (B) aufweisen.

Überraschend gute Lagerungsbeständigkeiten bei Temperaturen größer 100°C, insbesondere bei 120°C bis 150°C, in Luft und/oder niedrige Druckverformungswerte (DVR) bei Temperaturen größer 100°C, insbesondere bei 120°C bis 150°C, nach Tagen und/oder Wochen in Luft, und/oder niedrige Druckverformungswerte (DVR) werden erreicht bei Elastomerblends, die vorzugsweise 20 bis 50 phr des Kautschuks (A) und 80 bis 50 phr des Kautschuks (B), ganz besonders bevorzugt 20 phr des Kautschuks (A) und 80 phr des Kautschuks (B), aufweisen.

Als bevorzugte Elastomerblends haben sich solche erwiesen, bei denen der Kautschuk (A) ausgewählt ist aus
Ethylen-Propylen-Dien-Kautschuk (EPDM), wobei als Dien bevorzugt ein Norbornenderivat mit einer Vinylgruppe, bevorzugt 5-Vinyl-2-norbonen, eingesetzt ist, aus
Isobutylen-Isopren-Divinylbenzol-Kautschuk (IIR-Terpolymer),
Isobutylen-Isopren-Kautschuk (IIR), Butadien-Kautschuk (BR), Styrol-Butadien-Kautschuk (SBR), Styrol-Isopren-Kautschuk (SIR), Isopren-Butadien-Kautschuk (IBR), Isopren-Kautschuk (IR), Acrylnitril-Butadien-Kautschuk (NBR),
Chloropren-Kautschuk (CR), Acrylat-Kautschuk (ACM) oder aus teilweise hydriertem Kautschuk aus Butadien-Kautschuk (BR), Styrol-Butadien-Kautschuk (SBR), Isopren-Butadien-Kautschuk (IBR), Isopren-Kautschuk (IR), Acrylnitril-Butadien-Kautschuk (NBR) oder aus funktionalisiertem Kautschuk, wie zum Beispiel mit Maleinsäureanhydrid oder -derivaten, oder aus mit Vinylgruppen funktionalisiertem Perfluoropolyether-Kautschuk.

Ein bevorzugter Kautschuk (B) ist ausgewählt aus einem der zu Kautschuk (A) genannten Kautschuke und/oder aus Polyisobutylen-Kautschuk (PIB) mit zwei Vinylgruppen, wobei die Kautschuke (A) und (B) in einem jeweiligen Elastomerblend nicht übereinstimmen, also zumindest zwei chemisch verschiedene Kautschuke mit unterschiedlichen Eigenschaften darstellen.

Ein besonders bevorzugtes Elastomerblend weist als Kautschuk (A) Ethylen-Propylen-Dien-Kautschuk (EPDM) mit einer Vinylgruppe im Dien und als Kautschuk (B) Polyisobutylen (PIB) mit zwei Vinylgruppen auf.

Vorteilhafterweise beträgt das mittlere Molekulargewicht der Kautschuke (A) und (B) zwischen 5000 und 100000 g/mol, bevorzugt zwischen 5000 und 60000 g/mol.

Als Vernetzer (C) sind vorzugsweise eingesetzt
- eine SiH-enthaltende Verbindung der Formel (I): 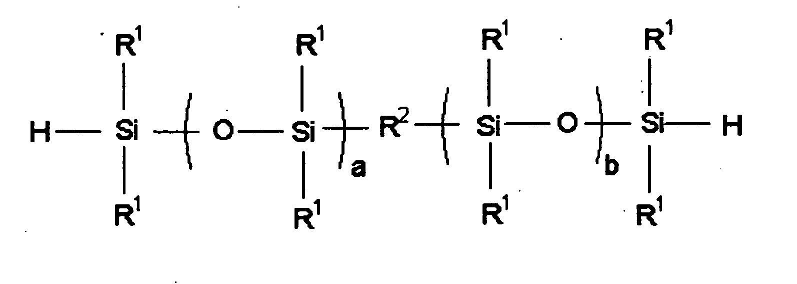
wobei R¹ für eine gesättigte Kohlenwasserstoffgruppe oder für eine aromatische Kohlenwasserstoffgruppe steht, die monovalent ist, 1 bis 10 Kohlenstoffatome hat und substituiert oder unsubstituiert ist, wobei a für ganzzahlige Werte von 0 bis 20 und b für ganzzahlige Werte von 0 bis 20 steht, sowie R² für eine divalente organische Gruppe mit 1 bis 30 Kohlenstoffatomen oder Sauerstoffatomen steht,
- eine SiH-enthaltende Verbindung der Formel (II): 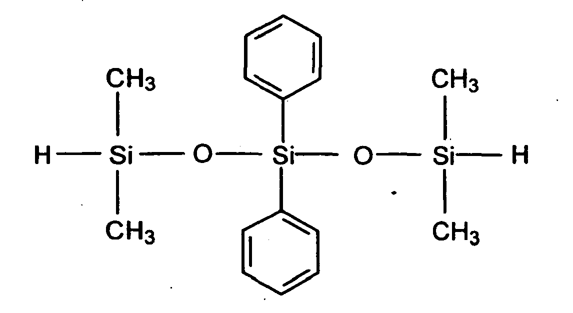 und/oder
- eine SiH-enthaltende Verbindung der Formel (III): 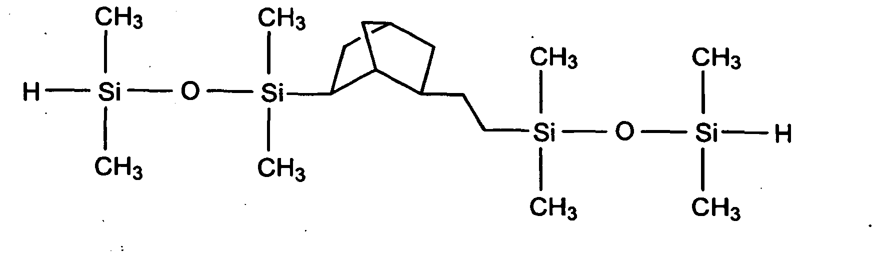 Der Vernetzer (C) ist besonders bevorzugt ausgewählt aus Poly(dimethylsiloxan-co-methylhydro-siloxan), Tris(dimethylsilyoxy)phenylsilan, Bis(dimethylsilyloxy)diphenylsilan, Polyphenyl(dimethylhydrosiloxy)-siloxan, Methylhydrosiloxanphenylmethylsiloxan-Copolymer, Methylhydrosiloxan-alkylmethylsiloxan-Copolymer, Polyalkylhydrosiloxan, Methylhydrosiloxan-diphenylsiloxan-alkylmethylsiloxan-Copolymer und/oder aus Polyphenylmethylsiloxanmethylhydrosiloxan.
   Das Hydrosilylierungs-Katalysatorsystem (D) ist vorzugsweise ausgewählt aus Platin(0)-1,3-Divinyl-1,1,3,3,-tetramethyldisiloxan-Komplex, Hexachloroplatinsäure, Dichloro(1,5-cyclooctadien)platin(II), Dichloro(dicyclopentadienyl)platin(II), Tetrakis(triphenylphosphin)platin(0), Chloro(1,5-cyclooctadien)rhodium(I)dimer, Chlorotris(triphenylphosphin)modium(I) und/oder Dichloro(1,5-cyclooctadien)palladium(II) gegebenenfalls in Kombination mit einem Kinetikregler ausgewählt aus Dialkylmaleat, insbesondere Dimethylmaleat, 1,3,5,7-Tetramethyl-1,3,5,7-tetravinylcyclosiloxan, 2-Methyl-3-butin-2-ol und/oder 1-Ethinylcyclohexanol.
   Der zumindest eine Füllstoff (E) ist vorteilhafterweise ausgewählt aus Furnace-, Flamm- und/oder Channel-Ruß, Kieselsäure, Metalloxid, Metallhydroxid, Carbonat, Silikat, oberflächenmodifizierter bzw. hydrophobierter, gefällter und/oder pyrogener Kieselsäure, oberflächenmodifiziertem Metalloxid, oberflächenmodifiziertem Metallhydroxid, oberflächenmodifiziertem Carbonat, wie Kreide oder Dolomit, oberflächenmodifiziertem Silikat, wie Kaolin, calciniertes Kaolin, Talkum, Quarzmehl, Kieselerde, Schichtsilikat, Glaskugeln, Fasern und/oder organischem Füllstoff, wie beispielsweise Holzmehl und/oder Cellulose.
   Das Coagens (F) ist vorteilhafterweise ausgewählt aus 2,4,6-Tris(allyloxy)-1,3,5-triazin (TAC), Triallylisocyanurat (TAIC), 1,2-Polybutadien, 1,2-Polybutadienderivaten, Allylethern, insbesondere Trimethylolpropan-diallylether, Allylalkoholestern, insbesondere Diallylphtalaten, Diacrylaten, Triacrylaten, insbesondere Trimethylpropantriacrylat, Dimethacrylaten und/oder Trimethacrylaten, insbesondere Trimethylolpropantrimethacrylat (TRIM), Triallylphosphonsäureestern und/oder Butadien-Styrol-Copolymeren mit mindestens zwei über Hydrosilylierung an die Kautschuke (A) und/oder (B) anbindenden funktionellen Gruppen.
   Als Additiv (G) finden
- Alterungsschutzmittel, beispielsweise UV-Absorber, UV-Screener, Hydroxybenzophenonderivate, Benzotriazoderivate oder Triazinderivate,
- Antioxidantien, zum Beispiel gehinderte Phenole, Lactone oder Phosphite,
- Ozonschutzmittel, zum Beispiel paraffinische Wachse,
- Flammschutzmittel,
- Hydrolyseschutzmittel, wie Carbodümidderivate,
- Haftvermittler, wie Silane mit über Hydrosilylierung an die Kautschukmatrix anbindenden funktionellen Gruppen, zum Beispiel mit Vinyltrimethoxysilan, Vinyltriethoxysilan, mit funktionalisierten Kautschuken modifizierte Polymere, wie Maleinsäurederivate, zum Beispiel Maleinsäurueanhydrid,
- Entformungsmittel bzw. Mittel zur Reduzierung der Bauteilklebrigkeit, wie zum Beispiel Wachse, Fettsäuresalze, Polysiloxane, Polysiloxane mit über Hydrosilylierung an die Kautschukmatrix anbindenden funktionellen Gruppen und/oder
- Farbstoffe und/oder Pigmente
- Weichmacher und/oder
- Verarbeitungshilfen
   Verwendung.

Ferner soll ein Verfahren zur Herstellung eines Elastomerblends bereitgestellt werden, bei dem beim Vernetzen keine Nebenprodukte erzeugt werden, die aufwendig entfernt werden müssen. Es sollen keine Spaltprodukte freigesetzt werden, die migrieren können und problematisch für Anwendungen im medizinischen Bereich oder im Bereich von Lebensmittelverpackungen sein können. Des Weiteren soll die Vernetzung mit einer vergleichsweise geringen Menge eines Hydrosilylierungs-Katalysatorsystems schneller geschehen als bei konventionellen Materialien.

Zur Herstellung eines erfindungsgemäßen Elastomerblends werden zunächst die Kautschuke (A) und (B), der zumindest eine Füllstoff (E) und gegebenenfalls das Coagens (F) und/oder das zumindest eine Additiv (G) gemischt, der Vernetzer (C) und das Hydrosilylierungs-Katalysatorsystem (D) als Einkomponentensystem oder als Zweikomponentensystem hinzugegeben sowie alle Komponenten gemischt.

Beim Einkomponentensystem erfolgt die Zugabe des Vernetzers (C) und des Hydrosilylierungs-Katalysatorsystems (D) zu den vorgenannten übrigen Komponenten in einem System bzw. Behälter: Beim Zweikomponentensystem hingegen werden der Vernetzer (C) und das Hydrosilylierungs-Katalysatorsystem (D) getrennt voneinander, also in zwei Systemen oder Behältern, jeweils zunächst mit einem Teil einer Mischung aus den übrigen Komponenten bis zur homogenen Verteilung gemischt, bevor beide Systeme, das heißt die Mischung mit dem Vernetzer (C) und die Mischung mit dem Hydrosilylierungs-Katalysatorsystem (D), zusammengeführt werden, und alle Komponenten gemischt werden. Das Zweikomponentensystem hat den Vorteil, dass die beiden Mischungen, in denen der Vernetzer (C) und das Hydrosilylierungs-Katalysatorsystem (D) getrennt voneinander sind, länger lagerbar sind als eine Mischung, die sowohl den Vernetzer (C) als auch das Hydrosilylierungs-Katalysatorsystem (D) enthält.

Anschließend wird das Produkt durch ein Spritzguß- bzw. (Liquid)Injection-Moulding-Verfahren ((L)IM), durch Pressen bzw. ein Compression-Moulding-Verfahren (CM), durch ein Transfer-Moulding-Verfahren (TM) oder durch ein davon jeweils abgeleitetes Verfahren, ein Druckverfahren, wie zum Beispiel Siebdruck, durch Raupenauftrag, Tauchen oder Sprühen verarbeitet.

Die vorgenannten erfindungsgemäßen Elastomerblends sind in einer Vielfalt von Anwendungen brauchbar. Verwendung finden sie vorteilhafterweise als Material im Produktions-, Transport-, Prozeßtechnik- und Verpackungsbereich von Lebensmitteln, insbesondere von Trinkwasser, oder von medizinischen oder pharmazeutischen Produkten oder im Bereich der Elektronikindustrie.

Elastomerblends, die durch Hydrosilylierung insbesondere in Gegenwart eines Platin-Katalysarors vernetzen, weisen eine besondere Sauberkeit auf.

Bei der herkömmlichen Vernetzung von Elastomeren werden zum Beispiel Schwefelverbindungen plus Aktivatoren oder Peroxide eingesetzt. Dabei entstehen bei der chemischen Reaktion, die zur Vernetzung führt, Nebenprodukte am Ort der Neubildung der chemischen Bindung. Diese Nebenprodukte verbleiben in der Gummimatrix und können nicht vollständig - auch nicht durch langes Nachheizen des Formteils - entfernt werden. Gleichwohl sind in die Gummimatrix hineindiffundierende Fluide in der Lage, diese Nebenprodukte zu lösen und durch Diffusionsprozesse an die Oberfläche des Formteils zu transportieren. Damit sind sie dort auch für angrenzende Fluide oder Oberflächen verfügbar und können zum Beispiel in Anwendungen im Trinkwasserbereich oder der Lebensmittelindustrie zu einer insbesondere gesundheitsbedenklichen Verunreinigung führen können. Dies ist bei den erfindungsgemäßen Elastomerblends gerade nicht der Fall, so dass diese bevorzugt für einen Einsatz in den vorgenannten Bereichen in Betracht kommen.

Gleiches gilt auch in der Medizintechnik, wie zum Beispiel für Bauteile von Dialysegeräten. Auch dabei ist gerade eine Freisetzung von Nebenprodukten zu vermeiden, was durch die Verwendung der erfindungsgemäßen Elastomerblends gewährleistet ist.

Bei der Vernetzungsreaktion durch Hydrosilylierung insbesondere unter Verwendung eines Platin-Katalysators handelt es sich um eine Additionsreaktion zur Knüpfung der vernetzenden Bindung. Dabei entstehen keine Nebenprodukte, die durch Diffusion aus der Elastomermatrix austreten können.

Die erfindungsgemäßen Elastomerblends sind deshalb als besonders saubere Werkstoffe für den Einsatz im Bereich der Lebensmittel-, Trinkwasser- oder Medizintechnik, Pharmazie und/oder im Bereich der Elektronik besonders geeignet.

Vorzugsweise sind die erfindungsgemäßen Elastomerblends als Material für Dichtungen, wie lose oder integrierte Dichtungen, wie zum Beispiel O-Ringe oder Nutringe, Klebedichtungen, Softmetalldichtungen oder Imprägnierungen, für Beschichtungen, Membranen oder Klebemassen von Schläuchen, Ventilen, Pumpen, Filtern, Befeuchtem, Reformern, Vorratsgefäßen (Tanks), Schwingungsdämpfern, akustisch aktiven Bauteilen, für Beschichtungen von Geweben, Vliesstoffen, elektromagnetischen Abschirmungen, Reifen, Bremsmanschetten, Bremsenteilen, Achsmanschetten, Faltenbälgen und/oder für elastomere Bodenbeläge und/oder Profile eingesetzt.

Aus den erfindungsgemäßen Elastomerblends werden daher bevorzugt zum Beispiel O-Ringe oder Flachdichtungen für Dialysegeräte in der Medizintechnik hergestellt.

Auch zum Beispiel in sogenannten Klappendichtungen, die in Rohrleitungen der Lebensmittelindustrie Stellklappen zur Regelung der Fluidförderung abdichten, sind die sehr sauberen erfindungsgemäßen Elastomerblends vorteilhaft verwendbar.

Die erfindungsgemäßen Elastomerblends sind weiterhin bevorzugt beispielsweise für Membranen, O-Ringe oder Flanschdichtungen im Trinkwasserbereich oder bei der Herstellung pharmazeutische Produkte einzusetzen.

Darüber hinaus haben die erfindungsgemäßen Elastomerblends, angesichts dessen, dass sie nahezu kein oder kein Silikon aufweisen, den Vorteil, dass die Permeation von Fluiden oder Gasen durch deren Werkstoffe gegenüber Silikonkautschuk wesentlich geringer ist.

Die erfindungsgemäßen Elastomerblends sind daher vorteilhafterweise besonders für Werkstoffe einzusetzen, für die eine besondere Permeationsdichtheit und das fehlende Ausdiffundieren von Nebenprodukten von Bedeutung sind. Diesbezüglich sind die erfindungsgemäßen Elastomerblends bevorzugt als Werkstoffe für Membranen in der Medizintechnik, wie zum Beispiel in Pumpen für Infusionen oder als O-Ringe für die Förderung von medizinischen Gasen eingesetzt.

### Ausführung der Erfindung

Im Folgenden werden bevorzugte Ausführungsbeispiele dieser Erfindung beschrieben.

Die Kautschuke (A) und (B), ein Füllstoff (E), sowie gegebenenfalls ein Coagens (F) werden in einem Mischer, einem SpeedMixer DAC 400 FVZ der Firma Hausschild & Co. KG, bei Temperaturen zwischen 30 und 60°C bis zu einer homogenen Verteilung der Komponenten gemischt. Anschließend werden ein Vernetzer (C) und ein Hydrosilylierungs-Katalysatorsystem (D) zugegeben, und die Mischung wird weiter bis zu einer homogenen Verteilung der Komponenten gemischt.

Aus dieser Mischung werden unter Vulkanisationsbedingungen bei 150°C beispielsweise in einer Presse 2 mm dicke Platten gepresst.

Als Kautschuk (A) wird Ethylen-Propylen-5-Vinyl-2-norbonen-Kautschuk von der Firma Mitsui Chemicals mit einem Norbonengehalt von 5,3 Gewichts-% und einem mittleren Molekulargewicht von 31000 g/mol eingesetzt (Mitsui-EPDM).

Als Kautschuk (B) wird Polyisobutylen (PIB) mit zwei Vinylgruppen von der Firma Kaneka mit einem mittleren Molekulargewicht von 16000 g/mol verwendet (EPION-PIB (EP 400)).

Als Vernetzer (C) wird Poly(dimethylsiloxan-co-methylhydro-siloxan) von der Firma Kaneka eingesetzt (CR 300). CR 300 hat mehr als 3 SiH-Gruppen pro Molekül und ist daher zum Aufbau von Netzwerken für difunktionelle Vinyl-Kautschuke, wie Polyisobutylen mit zwei Vinylgruppen, besonders gut geeignet.

Als Hydrosilylierungs-Katalysatorsystem (D) wird ein sogenannter Karstedt-Katalysator eingesetzt, nämlich Platin(0)-1,3-Divinyl-1,1,3,3,-tetramethyldisiloxan-Komplex, der 5%ig in Xylol gelöst und in Kombination mit Dimethylmaleat als Kinetikregler eingesetzt wird.

Als Füllstoff (E) wird hydrophobierte pyrogene Kieselsäure der Firma Degussa eingesetzt (Aerosil R8200). Hydrophobierte bzw. hydrohobe Kieselsäuren lassen sich besonders gut in unpolare Kautschuke einarbeiten und bewirken eine geringere Viskositätserhöhung sowie einen besseren Druckverformungsrest (DVR) im Vergleich zu unmodifizierten Kieselsäuren.

Die Erfindung lässt sich an Hand der folgenden Beispiele, die in den Tabellen sowie in den Figuren dargestellt sind, besser verstehen.

In den Beispielen der Elastomerblends und den Vergleichsbeispielen werden die folgenden Testmethoden verwendet, um die Eigenschaften der Elastomerblends im Vergleich zu den Einzelcompounds mit Mitsui-EPDM oder mit EPION-PIB (EP400) als alleinigem Kautschuktyp zu bestimmen:

| | |
|---|---|
| Härte [Shore A] nach | DIN 53505, |
| Druckverformungsrest (DVR) [%] nach | DIN ISO 815 |

(25% Deformation; 24h bei 100°C bzw. 24h/ 70 h/ 1008h bei 120°C bzw. 24h/70h/ 336h bei 150°C in Luft bzw.1008h bei 90°C in 2,5 M Methanol/Wasserlösung, angesäuert mit Ameisensäure),

### Permeation von Stickstoff

[cm³(NTP) mm/ m²h bar] nach DIN 53536 (bei 80°C), Bruchdehnung [%] und Zugfestigkeit [MPa] bei Raumtemperatur nach DIN 53504-S2 und relative Änderung der Bruchdehnung und der Zugfestigkeit [%] nach DIN 53508 (24h/ 70 h/ 1008h bei 120°C bzw. 24h/ 70h/ 1008h bei 150"C in Luft).

**Tabelle I**

| **Beispiel** | **Einzel-compound 1** | **Elastomer-blend 1** | **Elastomer-blend 2** | **Elastomer-blend 3** | **Einzel-compound 2** |
|---|---|---|---|---|---|
| **Kautschuk (A): Mitsui-EPDM [phr]** | 0 | **20** | **50** | **80** | 100 |
| **Kautschuk (B): EPION-PIB (EP400) [phr]** | 100 | **80** | **50** | **20** | 0 |
| Vernetzer (C): CR-300 [phr] | 4 | 4 | 4 | 4 | 4 |
| Kat.-System (D): ≈ 450 ppm Kat./Regler [µl] | 56/ 36 | 56/ 36 | 56/ 36 | 56/ 36 | 56/ 36 |
| Füllstoff (E): Aerosil R8200 [phr] | 20 | 20 | 20 | 20 | 20 |
| **Härte [Shore A]** | **21** | **30** | **31** | **31** | **24** |
| **DVR in Luft 100°C, 24h [%]** (Figur 1) | 23 | **18** | **12** | **14** | 17 |
| **Bruchdehnung [%]** RT (Figur 2) | **246** | **226** | **179** | **137** | **147** |
| **Zugfestigkeit [MPa]** RT (Figur 3) | 1,6 | **1,7** | **1,5** | **1,1** | 0,9 |
| **Permeation, 80°C [cm³(NTP) mm/ m²h bar]** (Figur 4) | 17 | ≈ 29 | 47 | 88 | 114 |

- In Figur 1: ist der Verlauf des Druckverformungsrests (DVR) (24h bei 100°C in Luft),
- in Figur 2: ist der Verlauf der Bruchdehnung (bei Raumtemperatur),
- in Figur 3: ist der Verlauf der Zugfestigkeit (bei Raumtemperatur) und
- in Figur 4: ist der Verlauf der Gasdurchlässigkeit (Permeation)
jeweils in Abhängigkeit von der Zusammensetzung verschiedener Elastomerblends mit Mitsui-EPDM als Kautschuk (A) und EPION-PIB (EP400) als Kautschuk (B) gezeigt.

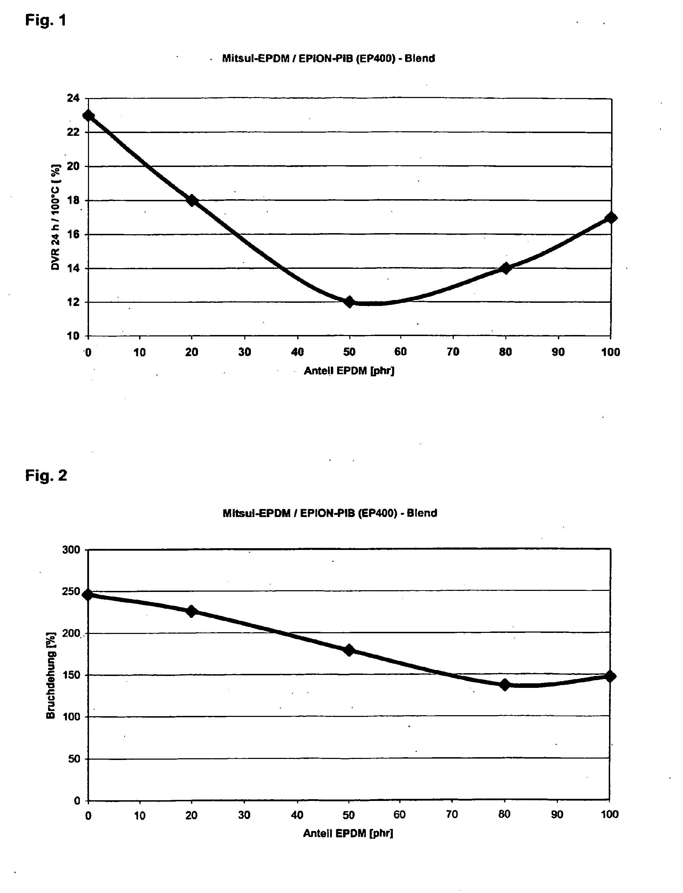

Die Daten der Tabelle I und der Diagramme in den Figuren 1 bis 4 zeigen, wie die Eigenschaften bezüglich Druckverformungsrest, Bruchdehnung, Zugfestigkeit und Gasdurchlässigkeit (Permeation) über das Blenden mit verschiedenen Anteilen an den Kautschuken (A) und (B) gegenüber den Einzelcompounds mit jeweils nur einem Kautschuktyp variiert werden können.

Überraschenderweise durchläuft der Druckverformungsrest (DVR) bei einem 1:1 Verhältnis von Mitsui-EPDM als Kautschuk (A) zu EPION-PIB (EP400) als Kautschuk (B), ein Minimum (siehe Figur 1). Dieses Elastomerblend 2 hat also die geringste bleibende Verformung unter Last im Vergleich zu anderen Mischungsverhältnissen und zu den Einzelcompounds 1 und 2 mit nur einem Kautschuktyp. Allgemein werden unter diesen Bedingungen besonders gute Druckverformungswerte bei den Elastomerblends, die 50 bis 70 phr eines Kautschuks (A) und 30 bis 50 phr eines Kautschuks (B) aufweisen, erreicht.

Die Bruchdehnung nimmt nahezu kontinuierlich mit zunehmendem Anteil an Mitsui-EPDM als Kautschuk (A) ab, hat aber bei einem 1:1 Verhältnis von Mitsui-EPDM als Kautschuk (A) zu EPION-PIB (EP400) als Kautschuk (B) noch vergleichsweise gute Bruchdehnungswerte (siehe Figur 2).

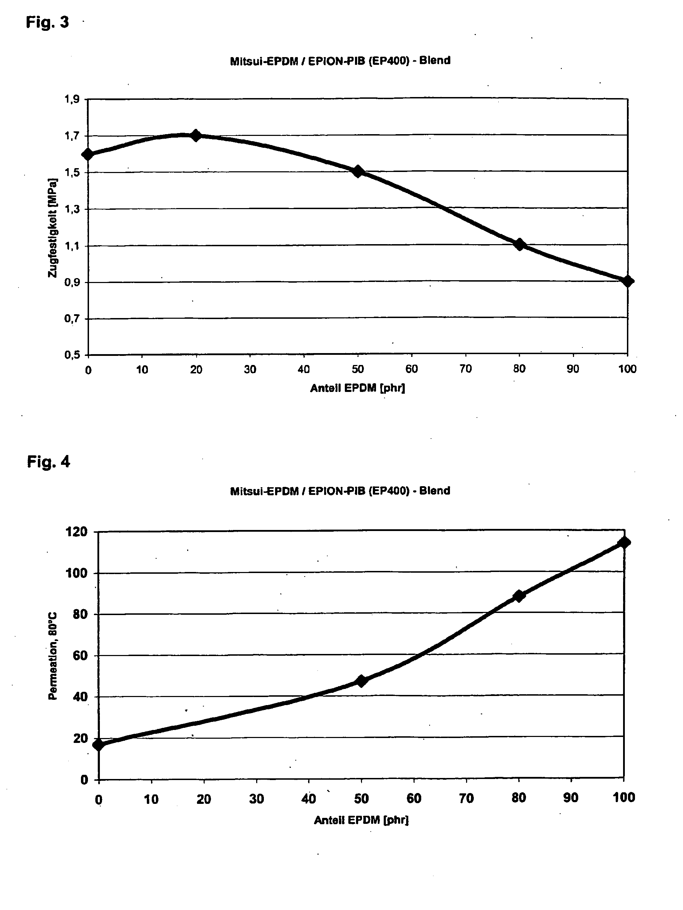

Bei einem Verhältnis von 20 phr Mitsui-EPDM als Kautschuk (A) zu 80 phr EPION-PIB (EP400) als Kautschuk (B) (Elastomerblend 1) ist die Zugfestigkeit am Besten sowohl im Vergleich zu den Zugfestigkeitswerten der Blends mit anderen Verhältnissen als auch zu denen der Einzelcompounds 1 und 2. Auch hier hat das Elastomerblend mit einem 1:1 Verhältnis von Mitsui-EPDM zu EPION-PIB (EP400) (Elastomerblend 2) ebenfalls noch vergleichsweise gute Zugfestigkeitswerte (siehe Figur 3).

Die Durchlässigkeit von Stickstoffgas nimmt mit steigendem Anteil an Mitsui-EPDM zu. Polyisobutylen weist im Gegensatz zu EPDM eine vergleichsweise hohe Gasdichtheit auf. Wie aus der Figur 4 ersichtlich ist, werden bei einem 1:1 Verhältnis von Mitsui-EPDM als Kautschuk (A) zu EPION-PIB (EP400) als Kautschuk (B) noch vergleichsweise geringe Gasdurchlässigkeitswerte erreicht.

**Tabelle II**

| Beispiel | Einzelcpd 2 Hysil | Einzelcpd 2 Hysil+ASM | Einzelcpd 2 Perox | Einzelcpd 2 Perox+ASM | **Elastomer-blend 1** |
|---|---|---|---|---|---|
| **Kautschuk (A): Mitsul-EPDM [phr]** | 100 | 100 | 100 | 100 | **20** |
| **Kautschuk (B): EPION-PIB) [phr]** | 0 | 0 | 0 | 0 | **80** |
| Hysil-Vernetzer (C): CR-300 [phr] | 4,5 | 4,5 | 0 | 0 | 4,5 |
| Perox-Vernetzer [phr] | 0 | 0 | 4 | 4 | 0 |
| Kat.-System (D): ≈ 450 ppm Kat./Regler [µl] | 56/ 36 | 56/ 36 | 0 | 0 | 56/ 36 |
| Füllstoff (E): Aerosil R8200 [phr] | 30 | 30 | 30 | 30 | 30 |
| Alterungsschutzmittel ASM (G) [phr] | 0 | 2 | 0 | 2 | 0 |
| **DVR [%] in Luft** | | | | | |
| **120°C, 24h** | 36 | 44 | 16 | 27 | **11** |
| **120°C, 70h** | 43 | 53 | 22 | 33 | **10** |
| **120°C, 1008h** | 95 | 85 | 57 | 60 | **50** |
| **150°C, 24h** | 37 | 62 | 23 | 34 | **15** |
| **150°C, 70h** | 67 | 72 | 35 | 57 | **18** |
| **150°C, 336h** | 81 | 77 | 60 | 63 | **48** |
| **(****Figur 5****)** | | | | | |
| **Lagerung in Luft 150°C, 1008h relative Änderung Zugfestigkeit [%]** | **-77,3** | **-73,9** | **61,6** | **-38,2** | **-24** |
| **Bruchdehnung [%] (****Figur 6****)** | **-97,9** | **-98,3** | **-99,5** | **-96,2** | **-48,9** |
| | | | | | |
| Herstellung der Prüfplatten | Einzelcpd 2 Hysil (+ASM) | | Einzelcpd 2 Perox (+AsSM) | Elastomer blend 1(+ASM) | Flüssigsilikon Hysil |
| Temperatur [°C] | 150 | | 180 | 150 | 150 |
| Zeit [min] | 10 | | 10 | 10 | 10 |

**Tabelle III**

| **Beispiel** | Einzelcpd 2 | Einzelcpd 2 | Einzelcpd 2 | Einzelcpd 2 | **Elastomer-** |
|---|---|---|---|---|---|
| | Hysil | Hysil+ASM | Perox | Perox+ASM | **blend 1** |
| Härte [Shore A] | | | | | |
| 120°C, 24h | 44 | 41 | 64 | 53 | **32** |
| 120°C, 70h | 47 | 45 | 67 | 55 | **32** |
| 120°C, 1008h | 74 | 59 | 85 | 63 | **40** |
| 150°C, 24h | 47 | 45 | 70 | 57 | **33** |
| 150°C, 70h | 47 | 45 | 77 | 59 | **32** |
| 150°C, 336h | 97 | 66 | 95 | 92 | **43** |
| Zugfestigkeit [MPa] | | | | | |
| 120°C, 24h | 4,7 | 4,9 | 3,8 | 4,9 | **2,8** |
| 120°C, 70h | 4,8 | 4,5 | 2,6 | 6 | **2,7** |
| 120°C, 1008h | 0,9 | 6 | 3,1 | 7,6 | **2,8** |
| 150°C, 24h | 4,8 | 5,1 | 1,5 | 6,3 | **2,5** |
| 150°C, 70h | 5,3 | 5,4 | 1,2 | 6,5 | **2,6** |
| 150°C, 1008h | 1 | 1,2 | 8,4 | 3,4 | **1,9** |

| Bruchdehnung [%] | | | | | |
|---|---|---|---|---|---|
| 120°C, 24h | 269 | 285 | 120 | 216 | **222** |
| 120°C, 70h | 241 | 247 | 74 | 227 | **213** |
| 120°C, 1008h | 16 | 175 | 13 | 168 | **170** |
| 150°C, 24h | 226 | 253 | 30 | 200 | **188** |
| 150°C, 70h | 268 | 287 | 13 | 191 | **200** |
| 150°C, 1008h | 8 | 7 | 1 | 10 | **118** |

| Lagerung in Luft | | | | | |
|---|---|---|---|---|---|
| relative Änderung | | | | | |
| Zugfestigkeit [%] | | | | | |
| 120°C, 24h | 6,8 | 6,5 | -26,9 | -10,9 | **12** |
| 120°C,70h | 9,1 | -2,2 | -50 | 9,1 | **8** |
| 120°C, 1008h | 0,9 | 6 | 3,1 | 38,2 | **12** |
| 150°C, 24h | 9,1 | 10,9 | -71,2 | 14,5 | **0** |
| 150°C, 70h | 20,5 | 17,4 | -36,8 | 18,2 | **4** |
| Bruchdehnung [%] | | | | | |
| 120°C, 24h | -29,2 | -30,8 | -35,8 | -17,6 | **-3,9** |
| 120°C, 70h | -36,6 | -40 | -60,4 | -13,4 | **-7,8** |
| 120°C, 1008h | -95,8 | -57,5 | -93 | -35,9 | **-26,4** |
| 150°C, 24h | -40,5 | -38,6 | -84 | -23,7 | **-18,6** |
| 150°C, 70h | -29,5 | -30,3 | -93 | -27,1 | **-13,4** |

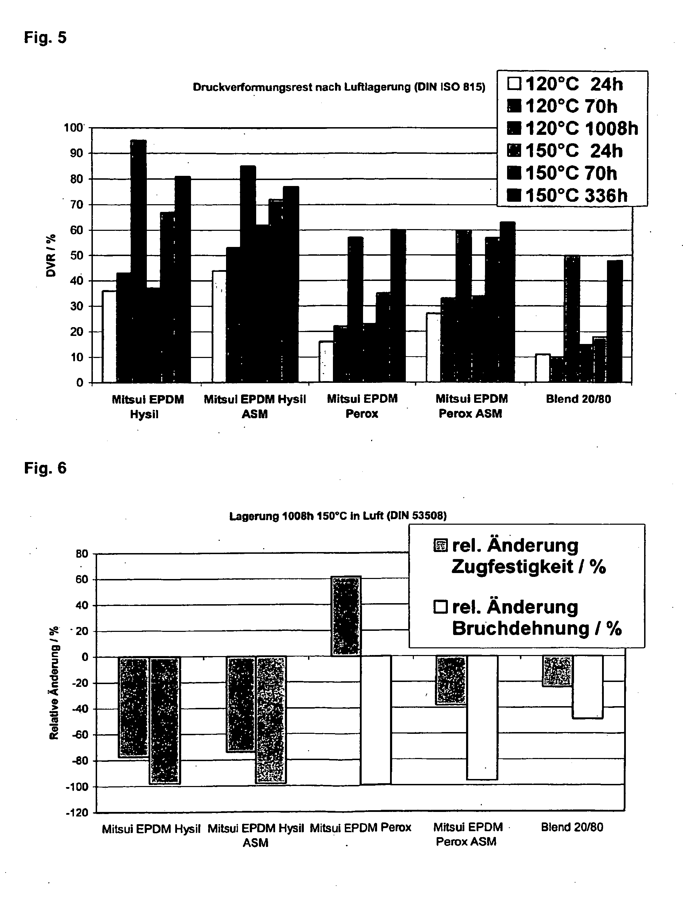

- In Figur 5: ist der Druckverformungsrest (DVR) nach verschiedenen Zeiten bei 120°C bzw. 150°C in Luft und
- in Figur 6: ist die relative Änderung der Zugfestigkeit und die relative Änderung der Bruchdehnung nach 1008h bei 150°C in Luft
gezeigt in Abhängigkeit von dem Elastomerblend 1 mit 20 phr Mitsui-EPDM als Kautschuk (A) und 80 phr EPION-PIB (EP400) als Kautschuk (B) bzw. von dem Einzelcompound 2 (100 phr EPDM) mit dem Hydrosilylierungs-Vernetzer (C) oder mit einem Peroxid-Vernetzer sowohl mit als auch ohne ein phenolisches Alterungsschutzmittel (ASM) als Additiv (G).

Als Peroxidvernetzer für das Mitsui-EPDM wird 2,5-Dimethyl-2,5-Di(tert-Butylperoxy)-hexan von der Firma Arkema Inc. verwendet (Luperox 101 XL-45).

Als phenolisches Alterungsschutzmittel (ASM) wird Irganox 1076 von der Firma Ciba-Geigy eingesetzt.

Die Daten der Tabellen II und III sowie die Diagramme in den Figuren 5 und 6 zeigen, dass das Elastomerblend 1 mit 20 phr Mitsui-EPDM als Kautschuk (A) und 80 phr EPION-PIB (EP400) als Kautschuk (B) gegenüber dem über Hydrosilylierung oder Peroxid vernetzten Einzelcompound 2 (100 phr Mitsui-EPDM) wesentlich geringere Druckverformungsrestwerte (DVR) aufweist sowie geringere Veränderungen der Eigenschaften, wie Härte, Bruchdehnung und Zugfestigkeit. Das gleiche gilt überraschenderweise gegenüber dem über Hydrosilylierung oder Peroxid vernetzten Einzelcompound 2 (100 phr Mitsui-EPDM) mit Zusatz von Alterungsschutzmitteln.

Druckverformungswerte größer 50% werden für viele Anwendungsgebiete als nicht akzeptabel angesehen.

Die erfindungsgemäßen Elastomerblends zeigen gegenüber einem Einzelcompound selbst bei hohen Temperaturen bis zu 160°C eine besondere Beständigkeit.

**Tabelle IV**

| **Beispiel** | Einzelcpd 2 Hysil +ASM | Einzelcpd 2 Perox +ASM | **Elastomer blend 1 +ASM** | **Elastomer blend 1** | Flüssigsilikon Hysil |
|---|---|---|---|---|---|
| **Kautschuk (A): Mitsui-EPDM [phr]** | 100 | 100 | 20 | **20** | Silikon 50 |
| **Kautschuk (B): EPION-PIB) [phr]** | 0 | 0 | **80** | **80** | Silikon 50 |
| Hysil-Vernetzer (C): CR-300 [phr] | 4,5 | 0 | 4,5 | 4,5 | |
| Perox-Vernetzer [phr] | 0 | 4 | 0 | 0 | |
| Kat.-System (D): ≈ 450 ppm Kat./Regler [µl] | 56/ 36 | 0 | 56/ 36 | 56/ 36 | |
| Füllstoff (E): Aerosil R8200 [phr] | 30 | 30 | 30 | 30 | |
| Alterungsschutzmittel ASM (G) [phr] | 2 | 2 | 2 | 0 | |
| **DVR [%] in 2,5 M CH₃OH/ H₂O/ HCO₂H 90°C, 1008h (****Figur 7****)** | 87 | 58 | **41** | **31** | 100 |

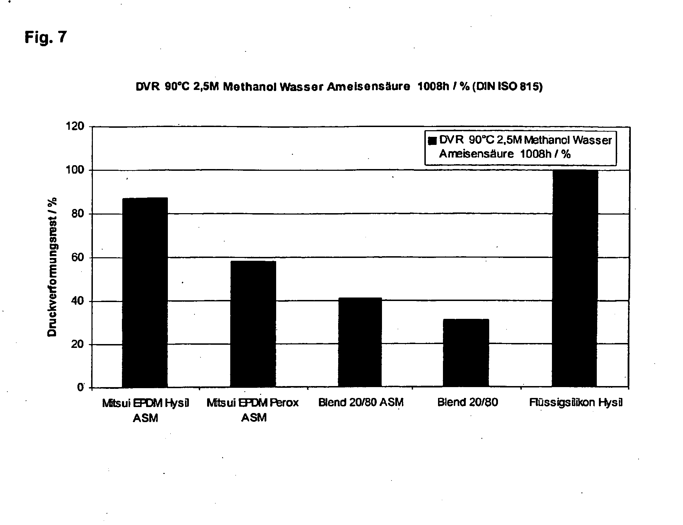

- In Figur 7: ist der Druckverformungsrest (DVR) nach 1008h bei 90°C in 2,5 M Methanol/Wasser/Ameisensäure)
gezeigt in Abhängigkeit von dem Elastomerblend 1 mit 20 phr Mitsui-EPDM als Kautschuk (A) und 80 phr EPION-PIB (EP400) als Kautschuk (B) mit und ohne ein phenolisches Alterungsschutzmittel (ASM) als Additiv (G) bzw. von dem Einzelcompound 2 (100 phr EPDM) mit dem Hydrosilylierungs-Vernetzer (C) oder mit einem Peroxid-Vernetzer sowohl mit als auch ohne ein phenolisches Alterungsschutzmittel (ASM) als Additiv (G) bzw. von einer üblichen hydrosilylierten Silikonmischung (50/50, Härte 40 Shore A).

Als Peroxidvernetzer für das Mitsui-EPDM wird 2,5-Dimethyl-2,5-Di(tert-Butylperoxy)-hexan von der Firma Arkema Inc. verwendet (Luperox 101 XL-45).

Als phenolisches Alterungsschutzmittel (ASM) wird Irganox 1076 von der Firma Ciba-Geigy eingesetzt.

Die Daten der Tabelle IV sowie das Diagramm in Figur 7 zeigen, dass das Elastomerblend 1 mit 20 phr Mitsui-EPDM als Kautschuk (A) und 80 phr EPION-PIB (EP400) als Kautschuk (B) mit und ohne Alterungsschutzmittel (ASM) gegenüber dem über Hydrosilylierung oder Peroxid vernetzten Einzelcompound 2 (100 phr Mitsui-EPDM) bzw. einer üblichen hydrosilylierten Silikonmischung (50/50, Härte 40 Shore A) nach 1 008h bei 90°C in einer 2,5 molaren Methanol/Wasserlösung, die mit Ameisensäure angesäuert ist, wesentlich geringere Druckverformungsrestwerte (DVR) aufweist.

Die Elastomerblends weisen im Gegensatz zu den Einzelcompounds und einer üblichen hydrosilylierten Silikonmischung selbst unter den genannten Bedingungen Druckverformungsrestwerte unter 50% auf.

Die erfindungsgemäßen Elastomerblends zeichnen sich damit durch eine besondere Beständigkeit in wässrig-sauren Medien, wie wässrig-sauren Alkohollösungen, aus und kommen daher als Material für Dichtungen bzw. Imprägnierungen, Beschichtungen, Membrane oder Klebemassen, Schwingungsdämpfer und/oder Faltenbälge in diesem Milieu in Betracht.

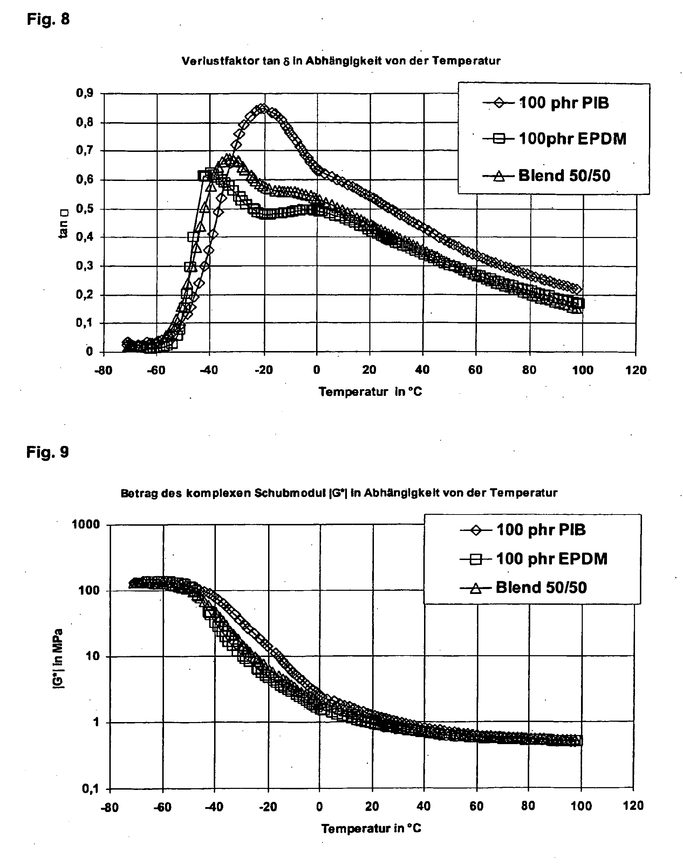

In Figur 8 ist der Verlauf des Verlustfaktors des mechanischen Dämpfungsverhaltens bei dynamischer Schubbeanspruchung (gemessen nach DIN EN ISO/IEC 17025 akkreditiert, Doppelsandwich-Probekörper, Temperaturbereich von -70°C bis + 100°C; Heizrate 1 K/min; Schrittweite 2K; Prüffrequenz 1 Hz; relative Schubverformung ± 2,5%) in Abhängigkeit von der Temperatur für das Elastomerblend 1 mit 20 phr Mitsui-EPDM als Kautschuk (A) und 80 phr EPION-PIB (EP400) als Kautschuk (B) gegenüber dem Einzelcompound 1 (100 phr EPION-PIB) und gegenüber dem Einzelcompound 2 (100 phr Mitsui-EPDM) gezeigt.

In Figur 9 ist der Verlauf des komplexen Schubmoduls G (gemessen nach DIN EN ISO/IEC 17025 akkreditiert, Doppelsandwich-Probekörper, Temperaturbereich -70°C bis + 100°C; Heizrate 1K/min; Schrittweite 2K; Prüffrequenz 1 Hz; relative Schubverformung ± 2,5%) in Abhängigkeit von der Temperatur für das Elastomerblend 1 mit 20 phr Mitsui-EPDM als Kautschuk (A) und 80 phr EPION-PIB (EP400) als Kautschuk (B) gegenüber dem Einzelcompound 1 (100 phr EPION-PIB) und gegenüber dem Einzelcompound 2 (100 phr Mitsui-EPDM) gezeigt.

Die Diagramme in den Figuren 8 und 9 zeigen, wie sich das mechanische Dämpfungsverhalten bei dynamischer Schubbeanspruchung durch die Wahl der Kautschukzusammensetzung variieren lässt.

Dies ist bedeutsam für die Auslegung dynamisch beanspruchter Bauteile.

Die Elastomerblends zeichnen sich damit, wie oben gezeigt, durch eine besondere Temperatur- und Medienbeständigkeit aus.

**Tabelle V**

| **Beispiel** | Elastomer blend 1 | **Elastomer-blend 1 mit Coagens (F) Nisso** | **Elastomer-blend 1 mit Coagens (F) TAIC** | **Elastomer-blend 3 mit Coagens(F) TAIC** | Elastomer blend 3 |
|---|---|---|---|---|---|
| **Kautschuk (A): Mitsul-EPDM [phr]** | 20 | **20** | **20** | **80** | 80 |
| **Kautschuk (B): EPION-PIB (EP400) [phr]** | 80 | **80** | **80** | **20** | 20 |
| Vernetzer (C): CR-300 [phr] | 4 | **10** | **10** | **10** | 4 |
| Kat.-System (D): Kat./Regler [phr]/[µl] | 0,2 / 35 | 0,2 / 35 | 0,2 / 35 | 0,2 / 35 | 0,2 / 35 |
| Füllstoff (E): Aerosil R8200 [phr] | 20 | **20** | **20** | **20** | 20 |
| **Coagens (F): [phr]** | | | | | |
| **Nisso-PB B 3000 TAIC** | | 1 | 1 | 1 | |
| **Härte [Shore A]** | 30 | **38** | **37** | **40** | 31 |
| **DVR 120°C, 24h [%]** | **28** | **39** | **27** | **22** | **36** |
| **Bruchdehnung [%]** | 226 | **170** | **210** | **110** | 137 |
| **Zugfestigkeit [MPa]** | 1,7 | **2,7** | **2,5** | **2,8** | 1,1 |

Als über Hydrosilylierung vernetzbares Coagens (F) wird Triallylisocyanurat (TAIC) der Firma Nordmann, Rassmann GmbH bzw. 1,2-Polybutadien (Nisso-PB B-3000) der Firma Nippon Soda Co., Ltd eingesetzt.

Die Daten der Tabelle V zeigen neben den bisherigen Beispielen von Elastomerblends ohne Coagens beispielhaft an der Verwendung des Coagens Triallylisocyanurat (TAIC) bzw. 1,2-Polybutadien (Nisso-PB B-3000) als Zusatz zu dem Elastomerblend 1 (20 phr EPDM/ 80 phr PIB) und dem Elastomerblend 3 (80 phr EPDM/ 20 phr PIB), wie sich die Zugabe eines über Hydrosilylierung vernetzbaren Coagens (F) auf die mechanischen Eigenschaften auswirkt.

Die Härtewerte werden dabei durch die Zugabe eines Coagens (F) erhöht ebenso wie die Zugfestigkeitswerte.

Der Druckverformungsrest (DVR) wird selbst bei einer Temperatur von 120°C nach 24 Stunden insbesondere durch die Zugabe von Triallylisocyanurat (TAIC) als Coagens (F) noch weiter verbessert.

Dies zeigt, dass für Elastomerblends, die ein Coagens der genannten Art umfassen, im Bereich der mechanische Eigenschaften noch weitere Optimierungsmöglichkeiten bestehen, die für vielfältige Anwendungsgebiete besonders vorteilhaft sind.

## Patentansprüche

1. Elastomerblend, umfassend einen Kautschuk (A) mit mindestens zwei über Hydrosilylierung vernetzbaren funktionellen Gruppen, ausgewählt aus Ethylen-Propylen-Dien-Kautschuk (EPDM) mit einer Vinylgruppe im Dien, und
mindestens einen anderen Kautschuk (B) mit mindestens zwei über Hydrosilylierung vernetzbaren funktionellen Gruppen, ausgewählt aus Polyisobutylen (PIB) mit zwei Vinylgruppen,
als Vernetzer (C) ein Hydrosiloxan oder Hydrosiloxanderivat oder ein Gemisch aus mehreren Hydrosiloxanen oder -derivaten, die im Mittel mindestens zwei SiH-Gruppen pro Molekül aufweisen,
ein Hydrosilylierungs-Katalysatorsystem (D) und
mindestens einen Füllstoff (E).

2. Elastomerblend nach Anspruch 1, das zusätzlich
ein über Hydrosilylierung vernetzbares Coagens (F) und/oder mindestens ein Additiv (G) aufweist.

3. Elastomerblend nach einem der vorhergehenden Ansprüche, wobei der Kautschuk (A) mehr als zwei über Hydrosilylierung vernetzbare funktionelle Gruppen aufweist und der zumindest eine Kautschuk (B) zwei über Hydrosilylierung vernetzbare funktionelle Gruppen aufweist, vorzugsweise zwei Vinylgruppen.

4. Elastomerblend nach einem der vorhergehenden Ansprüche, umfassend
- 20 bis 95 phr des Kautschuks (A),
- 80 bis 5 phr des zumindest einen Kautschuks (B),
- eine Menge des Vernetzers (C), wobei das Verhältnis der SiH-Gruppen zu den über Hydrosilylierung vernetzbaren funktionellen Gruppen bei 0,2 bis 20 liegt, bevorzugt bei 0,5 bis 5, besonders bevorzugt bei 0,8 bis 1,2,
- 0,05 bis 100000 ppm, bevorzugt 0,1 bis 5000 ppm des Hydrosilylierungs-Katalysatorsystems (D) und
- 5 bis 800 phr des zumindest einen Füllstoffs (E), für nicht magnetische Füllstoffe bevorzugt 10 bis 200 phr, für magnetische oder magnetisierbare bevorzugt 200 bis 600 phr.

5. Elastomerblend nach einem der vorhergehenden Ansprüche, umfassend
- 50 bis 95 phr des Kautschuks (A),
- 50 bis 5 phr des zumindest einen Kautschuks (B),
- eine Menge des Vernetzers (C), wobei das Verhältnis der SiH-Gruppen zu den über Hydrosilylierung vernetzbaren funktionellen Gruppen bei 0,2 bis 20 liegt, bevorzugt bei 0,5 bis 5, besonders bevorzugt bei 0,8 bis 1,2,
- 0,05 bis 100000 ppm, bevorzugt 0,1 bis 5000 ppm des Hydrosilylierungs-Katalysatorsystems (D) und
- 5 bis 800 phr des zumindest einen Füllstoffs (E), für nicht magnetische Füllstoffe bevorzugt 10 bis 200 phr, für magnetische oder magnetisierbare bevorzugt 200 bis 600 phr.

6. Elastomerblend nach einem der Ansprüche 2 bis 5, umfassend
- 0,1 bis 30 phr, bevorzugt 1 bis 10 phr, des Coagens (F) und/oder
- 0,1 bis 20 phr des zumindest einen Additivs (G).

7. Elastomerblend nach einem der vorhergehenden Ansprüche, umfassend 50 bis 70 phr des Kautschuks (A) und 50 bis 30 phr des Kautschuks (B).

8. Elastomerblend nach einem der vorhergehenden Ansprüche, wobei das mittlere Molekulargewicht der Kautschuke (A) und (B) zwischen 5000 und 100000 g/mol, bevorzugt zwischen 5000 und 60000 g/mol beträgt,

9. Elastomerblend nach einem der vorhergehenden Ansprüche, wobei der Vernetzer (C) ausgewählt ist aus
- eine SiH-enthaltende Verbindung der Formel (I): 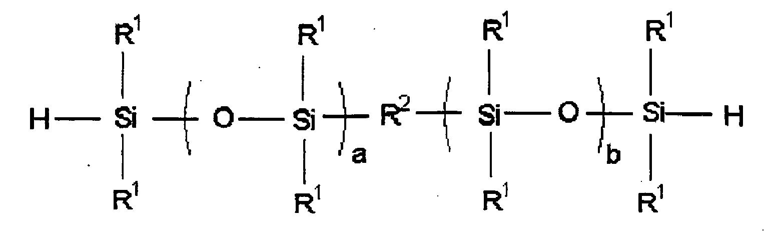
wobei R¹ für eine gesättigte Kohlenwasserstoffgruppe oder für eine aromatische Kohlenwasserstoffgruppe steht, die monovalent ist, 1 bis 10 Kohlenstoffatome hat und substituiert oder unsubstituiert ist, wobei a für ganzzahlige Werte von 0 bis 20 und b für ganzzahlige Werte von 0 bis 20 steht, sowie R² für eine divalente organische Gruppe mit 1 bis 30 Kohlenstoffatomen oder Sauerstoffatomen steht,
- eine SiH-enthaltende Verbindung der Formel (II): 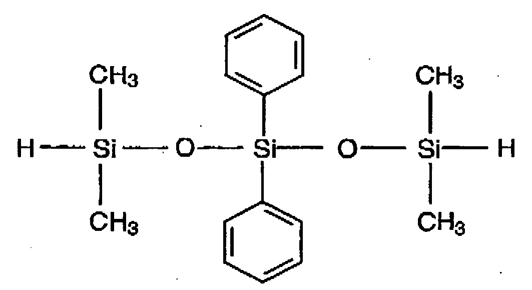 und/oder
- eine SiH-enthaltende Verbindung der Formel (III): 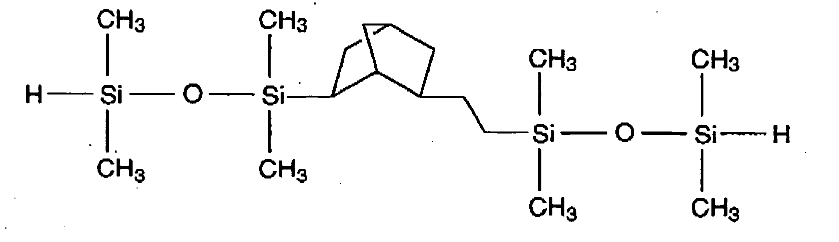
- bevorzugt aus Poly(dimethylsiloxan-co-methylhydro-siloxan), Tris(dimethylsilyoxy)phenylsilan, Bis(dimethylsilyloxy)diphenylsilan, Polyphenyl(dimethylhydrosiloxy)-siloxan, Methylhydrosiloxanphenylmethylsiloxan-Copolymer, Methylhydrosiloxanalkylmethylsiloxan-Copolymer, Polyalkylhydrosiloxan, Methylhydrosiloxan-diphenylsiloxan-alkylmethylsiloxan-Copolymer und/oder aus Polyphenylmethylsiloxan-methylhydrosiloxan.

10. Elastomerblend nach einem der vorhergehenden Ansprüche, wobei das Hydrosilylierungs-Katalysatorsystem (D) ausgewählt ist aus Hexachloroplatinsäure, Platin(0)-1,3-Divinyl-1,1,3,3,-tetramethyldisiloxan-Komplex, Dichloro(1,5-cyclooctadien)platin(II), Dichloro(dicyclopentadienyl)platin(II), Tetrakis(triphenylphosphin)platin(0), Chloro(1,5-cyclooctadien)rhodium(I)dimer, Chlorotris(triphenylphosphin)modium(I) und/oder Dichloro(1,5-cyclooctadien)palladium(II) gegebenenfalls in Kombination mit einem Kinetikregler ausgewählt aus Dialkylmaleat, insbesondere Dimethylmaleat, 1,3,5,7-Tetramethyl-1,3,5,7-tetravinylcyclosiloxan, 2-Methyl-3-butin-2-ol und/oder 1-Ethinylcyclohexanol.

11. Elastomerblend nach einem der vorhergehenden Ansprüche,
wobei der zumindest eine Füllstoff (E) ausgewählt ist aus Ruß, Graphit, Kieselsäure, Silikat, Metalloxid, Metallhydroxid, Carbonat, Glaskugeln, Fasern und/oder organischem Füllstoff.

12. Elastomerblend nach einem der Ansprüche 2 bis 14, wobei
das Coagens (F) ausgewählt ist aus 2,4,6-Tris(allyloxy)-1,3,5-triazin (TAC), Triallylisocyanurat (TAIC), 1,2-Polybutadien, 1,2-Polybutadienderivaten, Allylethem, insbesondere Trimethylolpropan-diallylether, Allylalkoholestem, insbesondere Diallylphtalaten, Diacrylate, Triacrylaten, insbesondere Trimethylpropantriacrylat, Dimethacrylaten und/oder Trimethacrylaten, insbesondere Trimethylolpropantrimethacrylat (TRIM), Triallylphosphonsäureestern und/oder Butadien-Styrol-Copolymeren mit mindestens zwei über Hydrosilylierung an die Kautschuke (A) und/oder (B) anbindenden funktionellen Gruppen.

13. Elastomerblend nach einem der Ansprüche 2 bis 15, wobei das zumindest eine Additiv (G) ausgewählt ist aus Alterungsschutzmitteln, Antioxidantien, Ozonschutzmitteln, Flammschutzmitteln, Hydrolyseschutzmitteln, Haftvermittlern, Entformungsmitteln bzw. Mitteln zur Reduzierung der Bauteilklebrigkeit, Farbstoffen und/oder Pigmenten, Weichmachern und/oder Verarbeitungshilfen.

14. Verfahren zur Herstellung eines Elastomerblends nach einem der vorgehenden Ansprüche, wobei die Kautschuke (A) und (B) und der zumindest eine Füllstoff (E) gemischt werden, der Vernetzer (C) und das Hydrosilylierungs-Katalysatorsystem (D) als Einkomponentensystem oder als Zweikomponentensystem hinzugegeben werden, alle Komponenten gemischt werden, und anschließend das Produkt durch ein Spritzguß- bzw. (Liquid)Injection-Moulding-Verfahren ((L)IM), durch Pressen bzw. ein Compression-Moulding-Verfahren (CM), durch ein Transfer-Moulding-Verfahren (TM) oder durch ein davon jeweils abgeleitetes Verfahren, ein Druckverfahren, wie zum Beispiel Siebdruck, durch Raupenauftrag, Tauchen oder Sprühen verarbeitet wird.

15. Verfahren zur Herstellung eines Elastomerblends nach einem der Ansprüche 2 bis 13, wobei die Kautschuke (A) und (B), der zumindest eine Füllstoff (E) sowie das Coagens (F) und/oder das zumindest eine Additiv (G) gemischt werden, der Vernetzer (C) und das Hydrosilylierungs-Katalysatorsystem (D) als Einkomponentensystem oder als Zweikomponentensystem hinzugegeben werden, alle Komponenten gemischt werden, und anschließend das Produkt durch ein Spritzguß- bzw. (Liquid)Injection-Moulding-Verfahren ((L)IM), durch Pressen bzw. ein Compression-Moulding-Verfahren (CM), durch ein Transfer-Moulding-Verfahren (TM) oder durch ein davon jeweils abgeleitetes Verfahren, ein Druckverfahren, wie zum Beispiel Siebdruck, durch Raupenauftrag, Tauchen oder Sprühen verarbeitet wird.

16. Verwendung eines Elastomerblends nach einem der Ansprüche 1 bis 13 als Material im Produktions-, Transport-, Prozeßtechnik- und Verpackungsbereich von Lebensmitteln, insbesondere von Trinkwasser, oder von medizinischen oder pharmazeutischen Produkten oder im Bereich der Elektronikindustrie.

17. Verwendung eines Elastomerblends nach einem der Ansprüche 1 bis 13 als Material von Dichtungen bzw. Imprägnierungen, Beschichtungen, Membranen oder Klebernassen von Schläuchen, Ventilen, Pumpen, Flitern, Befeuchtem, Reformern, Vorratsgefäßen (Tanks), Schwingungsdämpfern, akustisch aktiven Bauteilen, für Beschichtungen von Geweben, Vliesstoffen, elektromagnetischen Abschirmungen, Reifen, Bremsmanschetten, Bremsenteilen, Achsmanschetten, Faltenbälgen und/oder für Bodenbeläge und/oder Profile, insbesondere im Bereich Lebensmittel, Trinkwasser, Medizin, Pharmazie und/oder Elektronik.

## Claims

1. Elastomer blend comprising a rubber (A) having at least two hydrosilylation-crosslinkable functional groups selected from ethylene-propylene-diene monomer (EPDM) rubber having a vinyl group in the diene monomer, and
at least one other rubber (B) having at least two hydrosilylation-crosslinkable functional groups selected from polyisobutylene (PIB) having two vinyl groups,
a crosslinker (C) comprising a hydrosiloxane or hydrosiloxane derivative or a mixture of two or more hydrosiloxanes or hydrosiloxane derivatives which on average have at least two SiH groups per molecule,
a hydrosilylation catalyst system (D), and
at least one filler (E).

2. Elastomer blend according to Claim 1, further comprising a hydrosilylation-crosslinkable co-agent (F) and/or at least one additive (G).

3. Elastomer blend according to any preceding claim, wherein the rubber (A) includes more than two hydrosilylation-crosslinkable functional groups and the at least one rubber (B) includes two hydrosilylation-crosslinkable functional groups, preferably two vinyl groups.

4. Elastomer blend according to any preceding claim, comprising
- 20 to 95 phr of the rubber (A),
- 80 to 5 phr of the at least one rubber (B),
- an amount of the crosslinker (C) wherein the ratio of the SiH groups to the hydrosilylation-crosslinkable functional groups is in the range from 0.2 to 20, preferably in the range from 0.5 to 5 and more preferably in the range from 0.8 to 1.2,
- 0.05 to 100 000 ppm, preferably 0.1 to 5000 ppm of the hydrosilylation catalyst system (D), and
- 5 to 800 phr of the at least one filler (E), preferably 10 to 200 phr for nonmagnetic fillers and
preferably 200 to 600 phr for magnetic or magnetizable fillers.

5. Elastomer blend according to any preceding claim, comprising
- 50 to 95 phr of the rubber (A),
- 50 to 5 phr of the at least one rubber (B),
- an amount of the crosslinker (C) wherein the ratio of the SiH groups to the hydrosilylation-crosslinkable functional groups is in the range from 0.2 to 20, preferably in the range from 0.5 to 5 and more preferably in the range from 0.8 to 1.2,
- 0.05 to 100 000 ppm, preferably 0.1 to 5000 ppm of the hydrosilylation catalyst system (D), and
- 5 to 800 phr of the at least one filler (E), preferably 10 to 200 phr for nonmagnetic fillers and
preferably 200 to 600 phr for magnetic or magnetizable fillers.

6. Elastomer blend according to any one of Claims 2 to 5, comprising
- 0.1 to 30 phr, preferably 1 to 10 phr of the co-agent (F), and/or
- 0.1 to 20 phr of the at least one additive (G).

7. Elastomer blend according to any preceding claim, comprising 50 to 70 phr of the rubber (A) and 50 to 30 phr of the rubber (B).

8. Elastomer blend according to any preceding claim, wherein the average molecular weight of the rubbers (A) and (B) is between 5000 and 100 000 g/mol, preferably between 5000 and 60 000 g/mol.

9. Elastomer blend according to any preceding claim, wherein the crosslinker (C) is selected from
- an SiH-containing compound of formula (I): 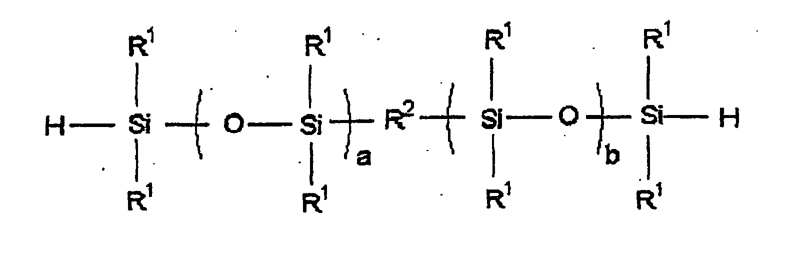
where R¹ represents a saturated hydrocarbyl group or an aromatic hydrocarbyl group which is monovalent, has 1 to 10 carbon atoms and is substituted or unsubstituted, where a represents integers ranging from 0 to 20 and b represents integers ranging from 0 to 20, and also R² represents a divalent organic group having 1 to 30 carbon atoms or oxygen atoms,
- an SiH-containing compound of formula (II): 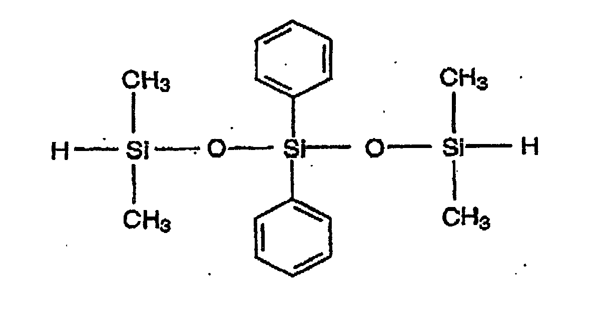 and/or
- an SiH-containing compound of formula (III): 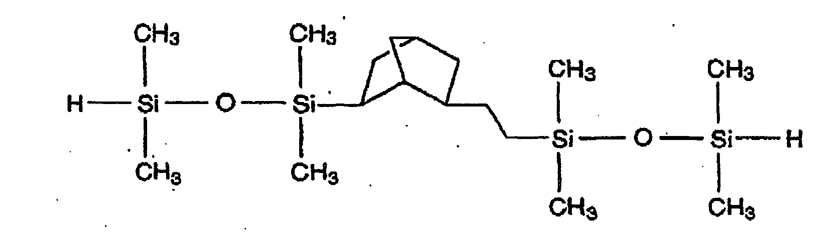
- preferably from poly(dimethylsiloxane-co-methylhydrosiloxane), tris(dimethylsilyloxy)phenylsilane, bis(dimethylsilyloxy)diphenylsilane, polyphenyl(dimethylhydrosiloxy)siloxane, methylhydrosiloxane-phenylmethylsiloxane copolymer, methylhydrosiloxane-alkylmethylsiloxane copolymer, polyalkylhydrosiloxane, methylhydrosiloxane-diphenylsiloxane-alkylmethylsiloxane copolymer and/or from polyphenylmethylsiloxanemethyl-hydrosiloxane.

10. Elastomer blend according to any preceding claim, wherein the hydrosilylation catalyst system (D) is selected from hexachloroplatinic acid, platinum(0)-1,3-divinyl-1,1,3,3-tetramethyldisiloxane complex, dichloro(1,5-cyclooctadiene)platinum(II), dichloro(dicyclopentadienyl)platinum(II), tetrakis(triphenylphosphine)platinum(0), chloro(1,5-cyclooctadiene)rhodium(I) dimer, chlorotris(triphenylphsophine)rhodium(I) and/or dichloro(1,5-cyclooctadiene)palladium(II) optionally combined with a kinetic regulator selected from dialkyl maleate, more particularly dimethyl maleate, 1,3,5,7-tetramethyl-1,3,5,7-tetravinylcyclosiloxane, 2-methyl-3-butyn-2-ol and/or 1-ethynylcyclohexanol.

11. Elastomer blend according to any preceding claim, wherein the at least one filler (E) is selected from carbon black, graphite, silica, silicate, metal oxide, metal hydroxide, carbonate, glass balls, fibres and/or organic filler.

12. Elastomer blend according to any one of Claims 2 to 14, wherein the co-agent (F) is selected from 2,4,6-tris(allyloxy)-1,3,5-trazine (TAC), triallyl isocyanurate (TAIC), 1,2-polybutadiene, 1,2-polybutadiene derivatives, allyl ethers, more particularly trimethylolpropane diallyl ether, allyl alcohol esters, more particularly diallyl phthalates, diacrylates, triacrylates, more particularly trimethylpropane triacrylate, dimethacrylates and/or trimethacrylates, more particularly trimethylolpropane trimethacrylate (TRIM), triallyl phosphonic esters and/or butadiene-styrene copolymers having at least two functional groups binding to the rubbers (A) and/or (B) via hydrosilylation.

13. Elastomer blend according to any one of Claims 2 to 15, wherein the at least one additive (G) is selected from anti-ageing agents, antioxidants, ozone protection agents, flame retardants, hydrolysis protection agents, adhesion promoters, mould release agents or agents for reducing structural-component tackiness, dyes and/or pigments, plasticizers and/or processing aids.

14. Method for production of an elastomer blend according to any preceding claim, wherein the rubbers (A) and (B) and at least one filler (E) are mixed, the crosslinker (C) and the hydrosilylation catalyst system (D) are added as one-component system or as two-component system, all components are mixed and subsequently the product is processed by an injection moulding or (liquid)injection moulding ((L)IM) process, by pressing or a compression moulding (CM) process, by a transfer moulding (TM) process or by some process derived from each of these, a printing process, such as for example screen printing, by bead application, dipping or spraying.

15. Method for production of an elastomer blend according to any one of Claims 2 to 13, wherein the rubbers (A) and (B) and at least one filler (E) and also the co-agent (F) and/or the at least one additive (G) are mixed, the crosslinker (C) and the hydrosilylation catalyst system (D) are added as one-component system or as two-component system, all components are mixed and subsequently the product is processed by an injection moulding or (liquid)injection moulding ((L)IM) process, by pressing or a compression moulding (CM) process, by a transfer moulding (TM) process or by some process derived from each of these, a printing process, such as for example screen printing, by bead application, dipping or spraying.

16. Use of an elastomer blend according to any of Claims 1 to 13 as a material in the realms of production, transportation, process engineering and packaging of food products, more particularly of drinking water or of medical or pharmaceutical products or in the electronics industry.

17. Use of an elastomer blend according to any one of Claims 1 to 13 as a material for seals or impregnations, coatings, membranes or adhesive compositions for hoses, valves, pumps, filters, humidifiers, reformers, stock reservoir vessels (tanks), vibration absorbers, acoustically active structural components, for coatings on wovens, nonwovens, electromagnetic shielding, tyres, brake sealing cups, brake parts, axle boots, bellows and/or for floor coverings and/or profiles, more particularly in the realm of food products, drinking water, medicine, pharmacy and/or electronics.

## Revendications

1. Alliage d'élastomères, comprenant un caoutchouc
(A) comportant au moins deux groupes fonctionnels réticulables par hydrosilylation, choisi parmi les caoutchoucs éthylène-propylène-diène (EPDM) à un groupe vinyle dans le diène, et
au moins un autre caoutchouc (B) comportant au moins deux groupes fonctionnels réticulables par hydrosilylation, choisi parmi les polyisobutylènes (PIB) à deux groupes vinyle,
en tant qu'agent de réticulation (C) un hydrosiloxane ou un dérivé d'hydrosiloxane ou un mélange de plusieurs hydrosiloxanes ou dérivés d'hydrosiloxane, qui comportent en moyenne au moins deux groupes SiH par molécule,
un système catalyseur d'hydrosilylation (D) et au moins une charge (E).

2. Alliage d'élastomères selon la revendication 1, qui en outre comporte un co-agent (F) réticulable par hydrosilylation et/ou au moins un additif (G).

3. Alliage d'élastomères selon l'une quelconque des revendications précédentes, dans lequel le caoutchouc (A) comporte plus de deux groupes fonctionnels réticulables par hydrosilylation et ledit au moins un caoutchouc (B) comporte deux groupes fonctionnels réticulables par hydrosilylation, de préférence deux groupes vinyle.

4. Alliage d'élastomères selon l'une quelconque des revendications précédentes, comprenant
- 20 à 95 phr (parties pour 100 parties de résine) du caoutchouc (A),
- 80 à 5 phr dudit au moins un caoutchouc (B),
- une quantité de l'agent de réticulation (C), le rapport des groupes SiH aux groupes fonctionnels réticulables par hydrosilylation allant de 0,2 à 20, de préférence de 0,5 à 5, de façon particulièrement préférée de 0,8 à 1,2,
- 0,05 à 100 000 ppm, de préférence 0,1 à 5 000 ppm du système catalyseur d'hydrosilylation (D) et
- 5 à 800 phr de ladite au moins une charge (E),
pour des charges non magnétiques de préférence 10 à 200 phr,
pour des charges magnétiques ou magnétisables de préférence 200 à 600 phr.

5. Alliage d'élastomères selon l'une quelconque des revendications précédentes, comprenant
- 50 à 95 phr du caoutchouc (A),
- 50 à 5 phr dudit au moins un caoutchouc (B),
- une quantité de l'agent de réticulation (C), le rapport des groupes SiH aux groupes fonctionnels réticulables par hydrosilylation allant de 0,2 à 20, de préférence de 0,5 à 5, de façon particulièrement préférée de 0,8 à 1,2,
- 0,05 à 100 000 ppm, de préférence 0,1 à 5 000 ppm du système catalyseur d'hydrosilylation (D) et
- 5 à 800 phr de ladite au moins une charge (E),
pour des charges non magnétiques de préférence 10 à 200 phr,
pour des charges magnétiques ou magnétisables de préférence 200 à 600 phr.

6. Alliage d'élastomères selon l'une quelconque des revendications 2 à 5, comprenant
- 0,1 à 30 phr, de préférence 1 à 10 phr, des co-agent (F) et/ou
- 0,1 à 20 phr dudit au moins un additif (G).

7. Alliage d'élastomères selon l'une quelconque des revendications précédentes, comprenant 50 à 70 phr du caoutchouc (A) et 50 à 30 phr du caoutchouc (B).

8. Alliage d'élastomères selon l'une quelconque des revendications précédentes, dans lequel la masse moléculaire moyenne des caoutchoucs (A) und (B) est comprise entre 5 000 et 100 000 g/mole, de préférence entre 5 000 et 60 000 g/mole.

9. Alliage d'élastomères selon l'une quelconque des revendications précédentes, dans lequel l'agent de réticulation (C) est choisi parmi
- un composé contenant SiH, de formule (I) : 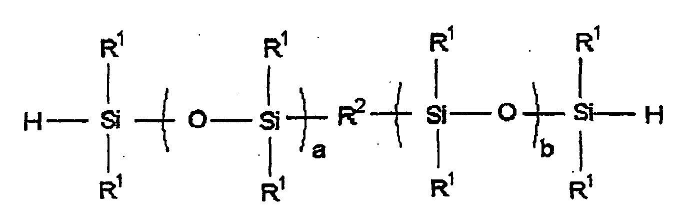
dans laquelle R¹ représente un groupe hydrocarboné saturé ou un groupe hydrocarboné aromatique, qui est monovalent, a de 1 à 10 atomes de carbone et est substitué ou non substitué, a représentant des nombres entiers valant de 0 à 20 et b représentant des nombres entiers valant de 0 à 20,
et R² représente un groupe organique divalent ayant de 1 à 30 atomes de carbone ou atomes d'oxygène,
- un composé contenant SiH, de formule (II) : 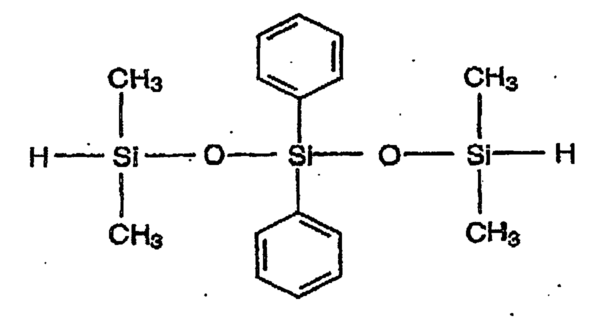 et/ou
- un composé contenant SiH, de formule (III) : 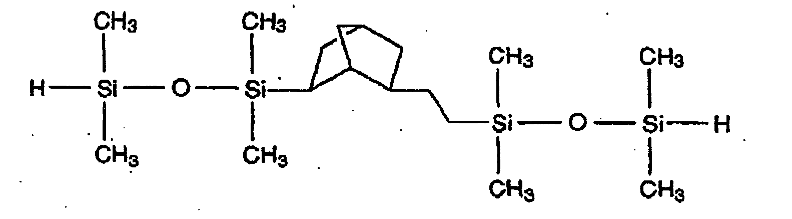
- de préférence choisi parmi le copolymère diméthylsiloxane/méthylhydro-siloxane, le tris(diméthylsilyloxy)phénylsilane, le bis(diméthylsilyloxy)diphénylsilane, le polyphényl(diméthylhydrosiloxy)-siloxane, le copolymère méthyl-hydrosiloxane/phénylméthylsiloxane, un copolymère méthylhydrosiloxane/alkyl-méthylsiloxane, un polyalkylhydrosiloxane, un copolymère méthylhydrosiloxane-diphénylsiloxanealkylméthylsiloxane et/ou le polyphénylméthylsiloxaneméthylhydrosiloxane.

10. Alliage d'élastomères selon l'une quelconque des revendications précédentes, dans lequel le système catalyseur d'hydrosilylation (D) est choisi parmi l'acide hexachloroplatinique,
le complexe platine(0)-1,3-divinyl-1,1,3,3-tétraméthyldisiloxane,
le dichloro(1,5-cyclo-octadiène)platine(II), le dichloro(dicyclopentadiényl)platine(II), le tétrakis(triphénylphosphine)platine(0), le dimère de chloro(1,5-cyclo-octadiène)-rhodium(I),
le chlorotris(triphénylphosphine)rhodium(I) et/ou le dichloro(1,5-cyclo-octadiène)palladium(II), éventuellement en association avec un régulateur de cinétique choisi parmi un maléate de dialkyle, en particulier le maléate de diméthyle, le 1,3,5,7-tétraméthyl-1,3,5,7-tétravinylcyclosiloxane, le 2-méthyl-3-butyn-2-ol et/ou le 1-éthynylcyclohexanol.

11. Alliage d'élastomères selon l'une quelconque des revendications précédentes, dans lequel ladite au moins une charge (E) est choisie parmi le noir de carbone, le graphite, l'acide silicique, un silicate, un oxyde métallique, un hydroxyde métallique, un carbonate, des billes de verre, des fibres et/ou une charge organique.

12. Alliage d'élastomères selon l'une quelconque des revendications 2 à 14, dans lequel le co-agent (F) est choisi parmi la 2,4,6-tris(allyloxy)-1,3,5-triazine (TAC), l'isocyanurate de triallyle (TAIC), le 1,2-polybutadiène, des dérivés de 1,2-polybutadiène, des éthers allyliques, en particulier l'éther diallylique de triméthylolpropane, des esters d'alcool allylique, en particulier les phtalates de diallyle, des diacrylates, des triacrylates, en particulier le triacrylate de triméthylpropane, des diméthacrylates et/ou triméthacrylates, en particulier le triméthacrylate de triméthylolpropane (TRIM), des esters d'acide triallylphosphonique et/ou des copolymères butadiène-styrène comportant au moins deux groupes fonctionnels qui se lient par hydrosilylation au caoutchouc (A) et/ou au caoutchouc (B).

13. Alliage d'élastomères selon l'une quelconque des revendications 2 à 15, dans lequel ledit au moins un additif (G) est choisi parmi des agents antivieillissement, des antioxydants, des agents de protection contre l'ozone, des agents ignifuges, des agents de protection contre l'hydrolyse, des promoteurs d'adhérence, des agents de démoulage ou des agents pour la réduction de la pégosité de composants, des colorants et/ou des pigments, des plastifiants et/ou des adjuvants de mise en oeuvre.

14. Procédé pour la préparation d'un alliage d'élastomères selon l'une quelconque des revendications précédentes, dans lequel on mélange les caoutchoucs (A) et (B) et ladite au moins une charge (E), on ajoute sous forme de système monocomposant ou de système bicomposant l'agent de réticulation (C) et le système catalyseur d'hydrosilylation (D), on mélange tous les composants, et ensuite on met en oeuvre le produit par un procédé de moulage par injection ou (Liquid)Injection-Moulding [(L)IM], par compression ou un procédé de Compression-Moulding (CM), par un procédé de moulage par transfert Transfer-Moulding (TM) ou par un procédé dérivé chaque fois de ceux-ci, un procédé d'impression, comme par exemple la sérigraphie, par application sous forme de cordon, immersion ou pulvérisation.

15. Procédé pour la préparation d'un alliage d'élastomères selon l'une quelconque des revendications 2 à 13, dans lequel on mélange les caoutchoucs (A) et (B), ladite au moins une charge (E) ainsi que le co-agent (F) et/ou ledit au moins un additif (G), on ajoute sous forme de système monocomposant ou de système bicomposant l'agent de réticulation (C) et le système catalyseur d'hydrosilylation (D), on mélange tous les composants, et ensuite on met en oeuvre le produit par un procédé de moulage par injection ou (Liquid)Injection-Moulding [(L)IM], par compression ou un procédé de Compression-Moulding (CM), par un procédé de moulage par transfert Transfer-Moulding (TM) ou par un procédé dérivé chaque fois de ceux-ci, un procédé d'impression, comme par exemple la sérigraphie, par application sous forme de cordon, immersion ou pulvérisation.

16. Utilisation d'un alliage d'élastomères selon l'une quelconque des revendications 1 à 13 dans le secteur de la production, du transport, de la technique de processus et de l'emballage de produits alimentaires, en particulier de l'eau potable, ou de produits médicaux ou pharmaceutiques ou dans le secteur de l'industrie de électronique.

17. Utilisation d'un alliage d'élastomères selon l'une quelconque des revendications 1 à 13, en tant que matériau d'imprégnations ou de joints d'étanchéité, revêtements, membranes ou matières adhésives de tuyaux souples, valves, pompes, filtres, humidificateurs, reformeurs, réservoirs (cuves), amortisseurs de vibrations, composants à activité acoustique, pour des revêtements de tissus, non-tissés, écrans électromagnétiques, pneumatiques, garnitures de freins, éléments de freins, garnitures d'essieux, soufflets et/ou pour des revêtements de sol et/ou des profilés, en particulier dans le secteur des produits alimentaires, de l'eau potable, de la médecine, de la pharmacie et/ou de l'électronique.
